(19) Europäisches Patentamt
European Patent Office
Office européen des brevets

(11) **EP 2 656 953 B1**

(12) **FASCICULE DE BREVET EUROPEEN**

(45) Date de publication et mention
de la délivrance du brevet:
**15.04.2015 Bulletin 2015/16**

(51) Int Cl.:
***B23D 61/18*** *(2006.01)*

(21) Numéro de dépôt: **13161837.3**

(22) Date de dépôt: **29.03.2013**

(54) **Scie à fil et fil pour découper un matériau**

Drahtsäge und Draht zum Zerschneiden eines Materials

Wire saw and wire for cutting a material

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2012 FR 1253855**

(43) Date de publication de la demande:
**30.10.2013 Bulletin 2013/44**

(73) Titulaires:
• **Commissariat à l'Énergie Atomique et aux Énergies Alternatives**
**75015 Paris (FR)**
• **THERMOCOMPACT**
**74370 Metz Tessy (FR)**

(72) Inventeurs:
• **Penot, Jean-Daniel**
**38000 GRENOBLE (FR)**
• **Coustier, Fabrice**
**73100 AIX LES BAINS (FR)**
• **Sanchez, Gérald**
**74230 DINGY SAINT CLAIR (FR)**
• **Weber, Xavier**
**74000 ANNECY (FR)**

(74) Mandataire: **Colombo, Michel et al**
**Brevinnov**
**310 avenue Berthelot**
**69008 Lyon (FR)**

(56) Documents cités:
**WO-A1-82/02511** **DE-A1- 3 716 943**
**US-A- 4 187 828**

## Description

L'invention concerne une scie à fil pour découper un matériau. L'invention concerne également un fil de découpe pour cette scie à fil. L'invention concerne enfin un procédé de découpe d'un matériau.

On connaît une scie à fil pour découper, par abrasion, des matériaux durs tels que des briques ou des lingots de silicium. Cette scie à fil comporte typiquement :

- un fil de découpe recouvert d'un revêtement incluant des particules abrasives ;
- deux guide-fils, configurés pour entraîner en mouvement le fil de découpe.

Typiquement, le contact entre le fil de découpe et le matériau à découper entraîne des vibrations du fil. Ces vibrations peuvent amener le fil de découpe à sortir hors des guide-fils. Une telle sortie compromet le fonctionnement de la scie et peut avoir des conséquences adverses sur le matériau découpé.

La demande de brevet US2011/126813 décrit une scie à fil visant à limiter ces vibrations, en ajustant la vitesse de déplacement du fil lorsque des vibrations sont détectées par un capteur de vibration du fil. Cette scie présente plusieurs inconvénients. En particulier, la détection des vibrations nécessite la présence d'un capteur, ce qui augmente le coût de la scie.

De l'état de la technique est également connu de la demande de brevet JP2010167509A. Cette demande ne traite pas du problème technique visant à réduire les vibrations du fil. En effet, ladite demande vise à obtenir une rugosité améliorée sur les surfaces découpées du matériau. A cet effet, la demande décrit un fil de découpe dont la section transversale présente des faces latérales planes dépourvues de revêtement abrasif. Ces faces latérales planes, décrites comme étant une caractéristique technique essentielle de la demande, permettent à des particules abrasives mobiles de lisser des parois du trait de découpe.

De l'état de la technique est également connu des documents suivants : DE3716943A1 et WO82/02511A1. US 4 187 828 décrit une scie à fil et un fil de découpe selon le préambule des revendications 1 et 2.

Il existe donc un intérêt pour une scie à fil permettant de découper des matériaux durs, en réduisant les vibrations du fil de découpe.

L'invention propose donc une scie à fil conforme à la revendication 1.

La rugosité plus faible de la face arrière du fil de découpe permet de réduire les vibrations causées par le contact entre les guide-fils et les particules abrasives, tout en conservant une bonne vitesse de découpe grâce aux particules abrasives de la face avant. De plus, la forme circulaire de la section de l'âme centrale facilite la modélisation physique du fil et notamment le calcul des modes de vibration du fil. Cela permet de prédire plus efficacement le comportement mécanique du fil lors de la découpe, et donc de prévenir l'apparition de vibrations en ajustant les paramètres de découpe.

L'invention a également pour objet un fil de découpe pour réaliser la scie à fil ci-dessus, ce fil de découpe étant conforme à la revendication 2.

Les modes de réalisations de cette scie à fil ou de ce fil de découpe peuvent comporter une ou plusieurs des caractéristiques des revendications dépendantes de cette scie à fil ou de ce fil de découpe.

Ces modes de réalisation présentent en outre les avantages suivants:

- la valeur de l'angle 2*$\alpha$ permet de limiter l'étendue du premier revêtement, afin d'éviter que des particules abrasives n'entrent en contact avec les parois des guide-fils ;
- le second revêtement formant les parois latérales du fil permet de diminuer, par lissage, la rugosité des surfaces découpées dans le matériau ; la valeur de l'angle 2*$\alpha$ permet alors de limiter l'étendue du premier revêtement, de sorte à ce que le second revêtement puisse entrer en contact avec les surfaces découpées.
- la valeur de l'angle 2*$\theta$ permet d'éviter que des particules abrasives du second revêtement n'entrent en contact avec les parois des guide-fils ;
- le troisième revêtement formant la face arrière et directement déposé sur le second revêtement permet de limiter les vibrations du fil ;

L'invention porte également sur un procédé de découpe d'un matériau, conforme à la revendication 7.

Les modes de réalisation de ce procédé peuvent présenter une ou plusieurs des caractéristiques des revendications dépendantes de ce procédé.

Ces modes de réalisation présentent en outre les avantages suivants:

- la variation d'au moins un paramètre de découpe lors de la mise en marche de la scie ou du déplacement du fil de découpe permet de limiter des vibrations du fil de découpe ; la mise en contact du fil avec la surface du matériau à découper est ainsi facilitée ;
- la variation d'au moins un paramètre de découpe, lors de la découpe du matériau, permet également de limiter l'apparition de vibrations du fil de découpe ;
- le fil de découpe présentant un premier revêtement qui s'étend de manière discontinue, avec une périodicité choisie en fonction de fréquences fondamentales de vibration, permet de limiter l'apparition de vibrations du fil de découpe.

L'invention sera mieux comprise à la lecture de la description qui va suivre, donnée uniquement à titre d'exemple non limitatif et faite en se référant aux dessins sur lesquels :

- la figure 1 est une illustration schématique d'une scie à fil pour découper un matériau ;
- la figure 2 est une vue en coupe transversale d'un fil de découpe reposant sur un guide-fil de la scie à fil de la figure 1 ;
- la figure 3 est une vue en coupe transversale du fil de découpe de la figure 2 lors de la découpe d'un matériau ;
- les figures 4 à 7 sont des vues en coupe transversale d'autres modes de réalisation du fil de découpe de la figure 2 ;
- la figure 8 est un organigramme d'un procédé de découpe d'un matériau ;
- la figure 9 est une illustration schématique d'un autre mode de réalisation de la scie à fil de la figure 2 ;
- la figure 10 est un organigramme d'un procédé de découpe d'un matériau utilisant la scie à fil de la figure 9.

Dans ces figures, les mêmes références sont utilisées pour désigner les mêmes éléments.

Dans la suite de cette description, les caractéristiques et fonctions bien connues de l'homme du métier ne sont pas décrites en détails.

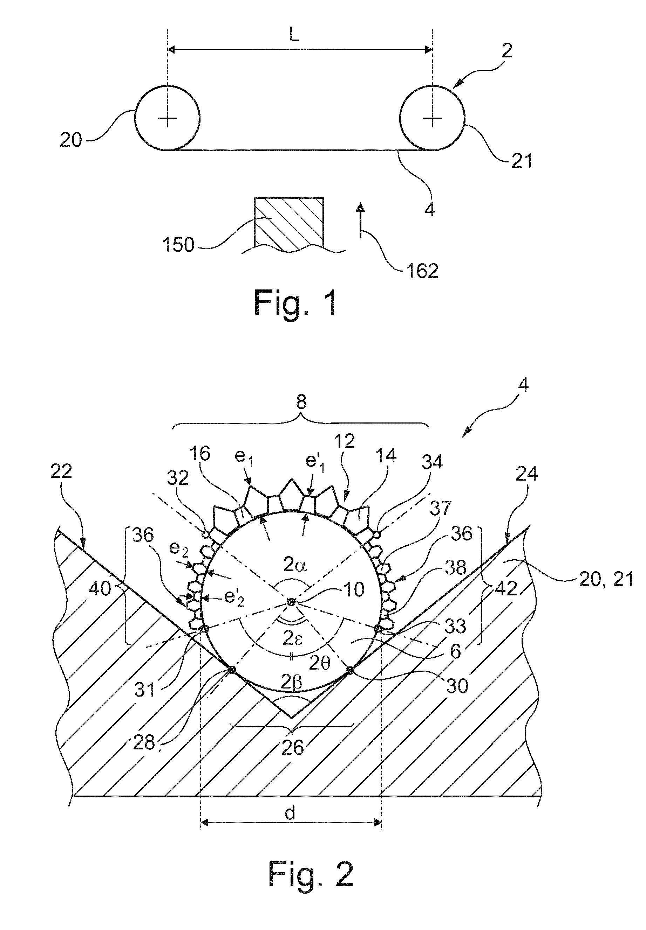

La figure 1 représente une scie à fil 2 pour découper un matériau 150. Cette scie 2 comprend :

- un fil de découpe 4 ;
- deux guide-fils 20, 21, entre lesquels s'étend une longueur L de fil 4 tendu.

Les guide-fils 20, 21 sont par exemple identiques. Par la suite, seul le guide-fil 20 est décrit en détail.

La figure 2 représente le fil 4 reposant sur le guide-fil 20.

Le fil 4 comprend une âme centrale 6. La section de cette âme 6 est de forme circulaire et de diamètre d. La section de l'âme 6 est centrée sur un axe longitudinal 10.

Typiquement, l'âme centrale 6 se présente sous la forme d'un fil simple présentant une résistance à la traction supérieure à 1000MPa ou 3000MPa et, généralement, inférieure à 5000MPa.

L'allongement à la rupture de l'âme 6 est supérieur à 1 % et, de préférence, supérieur à 2%. A l'inverse, l'allongement à la rupture de l'âme 6 ne doit pas être trop important et, par exemple, doit rester en dessous de 10% ou 5%. L'allongement à la rupture représente ici l'augmentation de la longueur de l'âme 6 avant que celle-ci ne se rompe.

Par exemple, le diamètre d est compris entre $70\mu m$ et 1 mm. Le diamètre d dépend souvent du matériau 150 que l'on souhaite découper. Par exemple, le diamètre d est compris entre $200\mu m$ et $450\mu m$ ou 1 mm pour découper des lingots de silicium tandis qu'il est compris entre $70\mu m$ et $100\mu m$ ou $200\mu m$ pour découper des tranches de silicium connues sous le terme anglais de « wafer ».

Par exemple, l'âme 6 est réalisée en acier au carbone ou en acier inoxydable ferritique ou en acier laitonné. La masse linéique m de l'âme 6 est, par exemple, comprise entre 10mg/m et 500mg/m et, de préférence, entre 50mg/m et 200mg/m.

Les guide-fils 20, 21 sont configurés pour entraîner en mouvement le fil 4 le long de l'axe longitudinal 10. Le guide-fil 20 comprend deux parois 22, 24 disposées de part et d'autre du fil 4, pour guider ce fil 4. Ces parois 22, 24 sont seulement en contact avec une face arrière 26 du fil 4. Ici, ces parois 22, 24 sont planes. Ce contact a lieu sur la périphérie du fil 4, le long de deux droites de contact 28, 30 et uniquement entre ces deux droites. La face arrière 26 est délimitée par les deux droites 28, 30. Sur la figure 2, ces droites 28, 30 sont représentées par des points, car elles sont perpendiculaires au plan de la feuille. Ces droites 28, 30 sont parallèles à l'axe longitudinal 10. Elles définissent, dans un plan transversal perpendiculaire à l'axe longitudinal 10, un premier triangle dont le sommet situé sur l'axe 10 fait un angle 2*$\varepsilon$.

Ici, les parois 22, 24 forment, dans le plan transversal, un angle au sommet égal à 2*$\beta$, tel que, exprimé en degrés, $\beta + \varepsilon = 90°$.

Par exemple, 2*$\beta$ est égal à 80°. Par exemple, l'angle 2*$\varepsilon$ est compris entre 20° et 170° et, de préférence, entre 20° et 150°, ou entre 40° et 130°.

Le fil 4 est destiné à découper le matériau 150 par frottement ou abrasion. Ce matériau 150 est dur. Ici, on considère qu'un matériau est dur si sa dureté sur l'échelle de Vickers est supérieure à 400 Hv50 ou supérieure ou égale à 6 sur l'échelle de Mohs. Dans cette description, les duretés Vickers sont exprimées pour une charge de 50 gramme force, c'est-à-dire pour une force de 0,49N. Toutefois, l'homme du métier sait qu'il faut ajuster la charge en fonction de l'épaisseur du matériau sur lequel les mesures sont réalisées pour que la taille de l'empreinte Vickers soit inférieure à l'épaisseur du matériau. Ici, ce fil 4 est destiné à découper du silicium monocristallin ou polycristallin ou encore du saphir ou du carbure de silicium.

A cet effet, le fil 4 comprend un premier revêtement 12, d'épaisseur $e_1$, formant une face avant 8 du fil 4. Ce revêtement 12 s'étend continûment sur l'âme 6 le long de l'axe 10. La rugosité de la face avant est au moins deux fois supérieure à la rugosité de la face arrière. Dans cette description, la rugosité est, par exemple, la valeur efficace de la rugosité de surface (« root mean square surface roughness » en langue anglaise) mesurée à l'aide d'un profilomètre optique à balayage. A cet effet, le revêtement 12 comprend une pluralité de particules abrasives 14, maintenues sur l'âme 6 par un liant 16.

La plus faible rugosité de la face arrière 26, par rapport à la face avant 8, au niveau de contact avec les parois 22, 24, permet de réduire l'usure mécanique de ces parois 22, 24. En effet, la présence de particules abrasives sur tout le pourtour du fil 4 aurait tendance à user, par abrasion, les faces 22 et 24 qui sont en contact avec le fil 4. Cette plus faible rugosité permet ainsi d'augmenter la durée de vie du guide-fil 20.

La dureté, ou micro-dureté, des particules abrasives 14 est supérieure à la dureté du matériau 150 à découper. Par exemple, la dureté, ou micro-dureté, d'une particule abrasive 14 est supérieure à 430 Hv50 sur l'échelle de Vickers et, de préférence, supérieure ou égale à 800 Hv50 ou 1 000 Hv50. Sur l'échelle de Mohs, la dureté, ou micro-dureté, des particules 14 est supérieure à 7 ou 8. Par exemple, les particules 14 sont des grains de diamant.

Le diamètre de ces particules 14 est compris entre $1\mu m$ et $500\mu m$ et est inférieur au tiers du diamètre de l'âme 6. Ici, le diamètre des particules 14 est compris entre $5\mu m$ et $50\mu m$ et, de préférence, entre $10\mu m$ et $40\mu m$. Lorsque ces particules 14 ne sont pas des sphères, le diamètre correspond au plus grand diamètre hydraulique de ces particules.

Le liant 16 a pour fonction de maintenir les particules abrasives 14 fixées sans aucun degré de liberté sur l'âme 6. De préférence, le liant 16 est un liant métallique, car ces liants sont plus durs que des résines et permettent donc de maintenir de façon plus efficace les particules abrasives 14 sur l'âme 6. Ici, le liant est du nickel.

Le liant 16 présente une épaisseur $e'_1$, définie comme l'épaisseur mesurée sur une portion de revêtement 12 ne comprenant pas de particule abrasive 14, comme illustré sur la figure 2. L'épaisseur $e'_1$ est ici supérieure à $3\mu m$ et inférieure à 35% du diamètre d. De préférence, l'épaisseur $e'_1$ est supérieure ou égale à $0,5*D_1$ ou à $0,8*D_1$, où $D_1$ est le diamètre moyen des particules abrasives 14. Typiquement, l'épaisseur $e'_1$ est inférieure au diamètre moyen $D_1$.

L'épaisseur $e_1$ du revêtement 12 est la plus grande distance mesurée entre la surface de l'âme 6 et la surface extérieure du revêtement 12, selon une direction radiale à un cercle inscrit à la section du fil 4. Dans ce mode de réalisation, l'épaisseur $e_1$ correspond à l'épaisseur du revêtement 12, mesurée sur une portion de revêtement 12 comprenant une particule abrasive 14, comme illustré sur la figure 2.

Le premier revêtement 12 s'étend, dans le plan transversal perpendiculaire à l'axe 10, uniquement et sur la totalité de la largeur de la face avant 8. La face avant 8 est délimitée par deux droites 32, 34, parallèles à l'axe 10. Ces droites 32, 34 définissent avec l'axe 10, dans le plan transversal, un second triangle dont le sommet situé sur l'axe 10 fait un angle $2*\alpha$. Ce second triangle est diamétralement opposé au premier triangle d'angle au sommet $2*\varepsilon$.

Dans cet exemple, le fil 4 comporte un second revêtement 36. Le second revêtement 36 s'étend, dans le plan transversal, sur des faces latérales 40, 42. Les faces latérales 40, 42 sont comprises entre les faces avant 8 et arrière 26 du fil. Sur chaque face latérale 40, 42, le second revêtement 36 s'étend uniquement entre la face avant 8 et, respectivement, deux droites latérales

31, 33 parallèles à l'axe 10 et situées de part et d'autre de la face avant 8. Ces droites 31, 33 définissent, avec l'axe 10, dans le plan transversal, un troisième triangle dont le sommet situé sur l'axe 10 fait un angle $2*\theta$.

Ce revêtement 36 comprend une pluralité de particules abrasives 37 maintenues sur l'âme 6 par un liant 38. Par exemple, le liant 38 est identique au liant 16. Le liant 38 a une épaisseur $e'_2$ qui est ici comprise entre $5\mu m$ et $40\mu m$. Par exemple, les particules abrasives 37 sont composées du même matériau que les particules abrasives 14. Ici, l'épaisseur $e_2$ correspond à l'épaisseur du revêtement 36, mesurée sur une portion de revêtement 36 comprenant une particule abrasive 37, comme illustré sur la figure 2.

Le second revêtement 36 est moins abrasif que le premier revêtement 12. La rugosité du second revêtement 36 est au moins deux fois inférieure à la rugosité du premier revêtement 12. Cette rugosité est, au plus, huit fois inférieure à la rugosité du premier revêtement 12. A cet effet, les particules 37 présentent un diamètre moyen inférieur au diamètre moyen des particules 14. Par exemple, le diamètre des particules 37 est inférieur ou égal à $20\mu m$ ou $15\mu m$. Ce diamètre est, par exemple, supérieur à $3\mu m$ ou $5\mu m$.

L'angle $\alpha$, exprimé en degrés, est ici strictement inférieur à $\alpha_{max1}$. $\alpha_{max1}$ est égal à $\arcsin[(\Phi+2*\eta_2)/(\Phi+2*\eta_1)]$, où :

- $\Phi$ est le diamètre du plus grand cercle inscrit à la section transversale du fil, ce cercle inscrit étant centré sur l'axe 10,
- $\eta_1$ est la plus grande distance mesurée entre ce cercle inscrit et l'extrémité d'une particule 14 de la face avant, selon une direction radiale au cercle inscrit,
- $\eta_2$ est la plus grande distance mesurée entre ce cercle inscrit et l'extrémité d'une particule 37 de la face latérale 40,42, selon une direction radiale au cercle inscrit.

Dans cet exemple, le plus grand cercle inscrit au fil et centré sur l'axe 10 est confondu avec le pourtour de l'âme 6. Le diamètre $\Phi$ est donc égal au diamètre d. De même, les distances $\eta_1$ et $\eta_2$ sont, respectivement, égales aux épaisseurs $e_1$ et $e_2$.

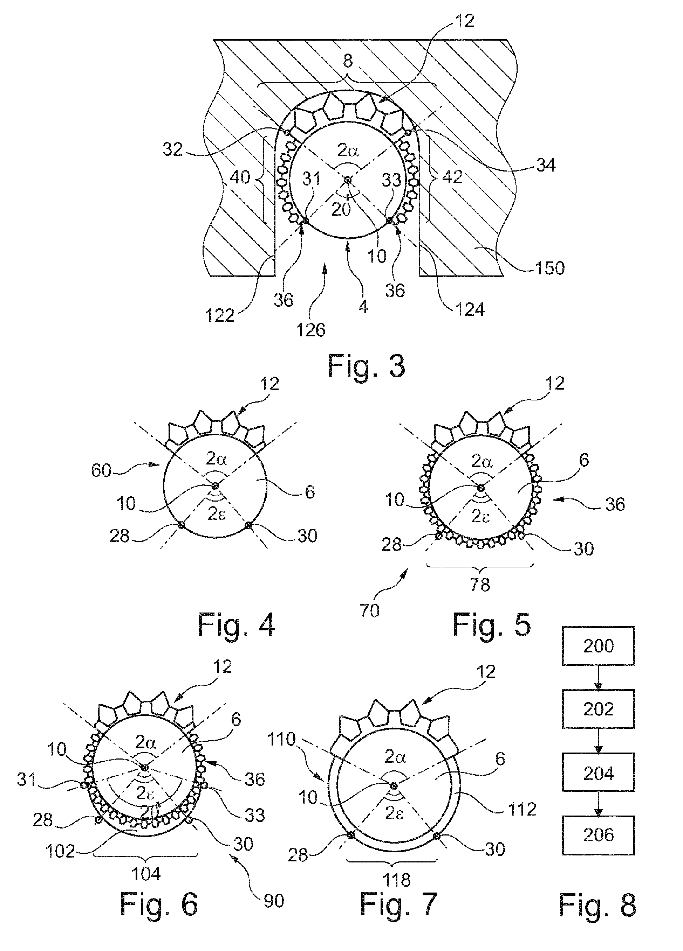

Grâce à ce choix de la valeur de l'angle $\alpha_{max1}$, comme illustré à la figure 3, les faces latérales 40, 42 du fil, recouvertes avec le second revêtement 36, lissent des parois 122, 124 du trait de scie 126 (« kerf » en langue anglaise) formé dans le matériau 150 par la découpe. Les surfaces des morceaux découpés du matériau 150 présentent ainsi des faces moins rugueuses.

Ainsi, la valeur $\alpha_{max1}$ permet de limiter l'étendue du premier revêtement 12 sur le pourtour de l'âme 6, afin de permettre au second revêtement 36 d'entrer en contact avec les parois 122 et 124, ce qui améliore l'état de surface du matériau 150.

De préférence, dans ce mode de réalisation, la valeur de $\alpha$ est supérieure ou égale à $0,8*\alpha_{max1}$ et stric-

tement inférieure à $\alpha_{max1}$.

Pour éviter que le revêtement 36 n'entre en contact avec les parois 22, 24 du guide fil 20, l'angle θ est strictement supérieur à une quantité $\theta_{min}$. Ici, $\theta_{min}$ est égal à ($\epsilon$ + arccos[Φ/(Φ+2*$\eta_2$)]).

La figure 4 représente un fil 60 apte à être utilisé en lieu et place du fil 4. Ce fil 60 est identique au fil 4, sauf que le revêtement 36 est omis. Dans ce mode de réalisation, l'âme 6 est directement exposée à l'extérieur, au niveau des faces latérales. Pour que l'âme 6 ne soit pas usée par le matériau 150 lors de la découpe, l'angle $\alpha$, exprimé en degrés, est supérieur ou égal à $\alpha_{min1}$, et inférieur à $\alpha_{max2}$.

La valeur $\alpha_{min1}$ est égale à arcsin[Φ/(Φ+2*η)], où :

Φ est le diamètre du plus grand cercle inscrit à la section transversale du fil, ce cercle inscrit étant centré sur l'axe 10, et
- η est la plus grande distance mesurée entre le cercle inscrit et l'extrémité d'une particule 14 de la face avant, selon une direction radiale au cercle inscrit.

Dans cet exemple, le plus grand cercle inscrit au fil et centré sur l'axe 10 est confondu avec le pourtour de l'âme 6. Le diamètre Φ est donc égal au diamètre d. De même, la distance η est égale à l'épaisseur $e_1$.

Ainsi, la valeur $\alpha_{min1}$ permet de maximiser l'étendue du revêtement 12 sur le pourtour de l'âme 6, afin d'accélérer la vitesse de découpe du matériau 150 et d'éviter que l'âme 6 n'entre en contact direct avec les parois 122, 124.

La valeur $\alpha_{max2}$ est égale à (180° - $\epsilon$ - arccos[Φ/(Φ+2*η)]), pour empêcher que le revêtement 12 n'entre en contact avec les parois 22, 24 du guide-fil 20, ce qui limite les vibrations du fil 60.

Par exemple, 2*$\alpha$ est compris entre 45° et 180° et, de préférence, entre 50° et 150° ou 60° et 95°.

La figure 5 représente un fil 70 apte à être utilisé en lieu et place du fil 4. Ce fil 70 est identique au fil 4, sauf que le revêtement 36 forme une face arrière 78 du fil 70. Cette face arrière 78 est destinée à venir en contact avec le guide-fil 20. Dans ce cas, l'angle $\alpha$, exprimé en degrés, est inférieur à la valeur $\alpha_{max1}$.

La figure 6 représente un fil 90 apte à être utilisé en lieu et place du fil 4. Ce fil 90 est identique au fil 70, sauf que la face arrière 78 est recouverte d'un troisième revêtement 102 pour former une face arrière 104 du fil 90. Ici, le revêtement 102 s'étend entre les droites 31 et 33. Cette face arrière 104 est destinée à venir directement en contact avec le guide-fil 20. Ce troisième revêtement 102 présente une rugosité au moins deux fois inférieure à la rugosité du revêtement 36 et, de préférence, au moins dix fois inférieure. Ici, le troisième revêtement 102 ne comporte pas de particule abrasive dont le diamètre est supérieur à 1μm ou 0,5μm. Ce troisième revêtement 102 est, par exemple, une couche du liant 16.

La figure 7 représente un fil 110 apte à être utilisé en lieu et place du fil 4. Ce fil 110 est identique au fil 60, sauf que le fil 110 comprend un revêtement 112, directement déposé sur l'âme 6 et s'étendant sur la périphérie de l'âme 6, à l'exception de la face avant. Ce revêtement 112 forme donc une face arrière 118 du fil 110, destinée à venir directement en contact avec le guide-fil 20. Ce revêtement 112 présente une rugosité au moins dix fois inférieure à la rugosité du premier revêtement 12. Ici, le revêtement 112 ne comporte pas de particule abrasive dont le diamètre est supérieur à 1μm ou 0,5μm. Ce revêtement présente une épaisseur $e_3$. Ce revêtement 112 ne doit pas frotter contre les parois 122, 124. Pour cela, l'angle $\alpha$, exprimé en degrés, est supérieur ou égal à la valeur $\alpha_{min1}$, et inférieur à $\alpha_{max2}$.

Dans cet exemple, pour le calcul de la valeur $\alpha_{min1}$, le plus grand cercle inscrit au fil 110 et centré sur l'axe 10 a pour diamètre Φ égal à d+2$e_3$. La distance η est égale à ($e_1$-$e_3$).

Le fonctionnement de la scie 2 pour découper le matériau 150 va maintenant être décrit, en référence au procédé de la figure 8.

Lors d'une étape 200, le fil 4 est fourni et est étendu entre les guide-fils 20, 21 avec une tension mécanique T, par exemple comprise entre 10N et 50N et, de préférence, comprise entre 20N et 30N.

Lors d'une étape 202, la scie 2 est mise en marche. Le fil 4 est mis en mouvement le long de son axe 10 jusqu'à atteindre une vitesse v. Par exemple, cette vitesse v est comprise entre 5m/s et 15m/s.

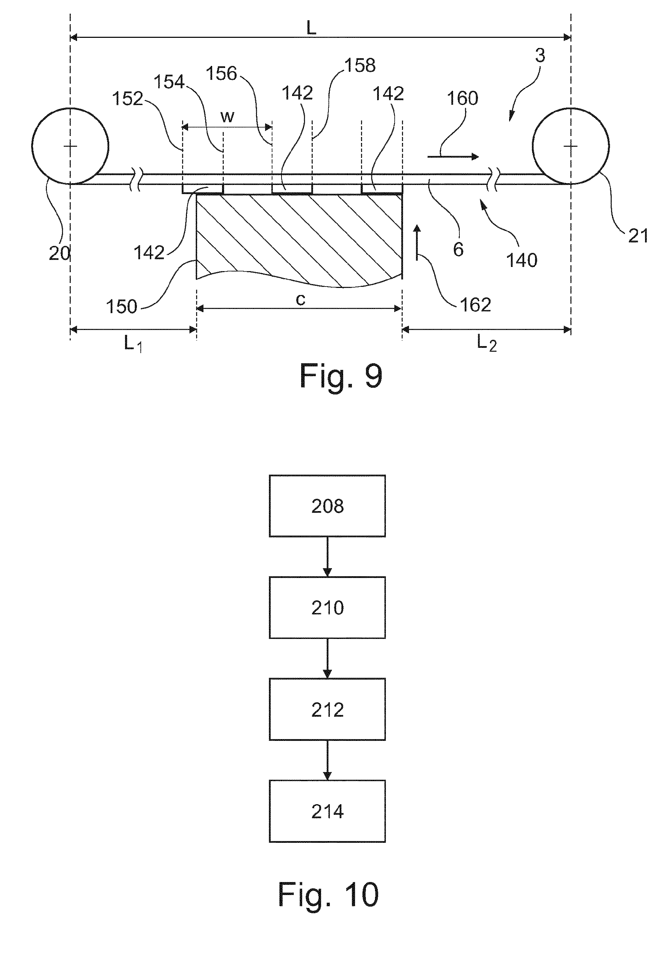

Lors d'une étape 204, le matériau 150 est déplacé vers le fil 4 avec une vitesse $V_m$, de manière à amener la surface à découper du matériau 150 en contact direct avec le premier revêtement 12 du fil 4. Par exemple, le matériau 150 est déplacé suivant la direction illustrée par la flèche 162 des figures 1 ou 9. L'étape 204 dure jusqu'à ce que le matériau 150 entre en contact avec le fil 4.

Lors d'une étape 206, le matériau est découpé, par abrasion ou par frottement, par les particules abrasives 14 du premier revêtement 12. Pendant cette étape, le matériau 150 continue à être déplacé vers le fil 4, au fur et à mesure de la découpe, jusqu'à ce que le matériau 150 soit découpé.

Étant donné que l'âme 6 est de section circulaire, le fil 4 peut être modélisé comme une corde tendue de longueur libre L entre les deux guide-fils 20, 21, tant qu'il n'est pas en contact direct avec le matériau 150. On peut alors calculer la fréquence fondamentale f des modes propres du fil 4. Cette fréquence f, exprimée en Hertz, est donnée par l'expression

$$f = 1/(2 \times L) \times \sqrt{T/m}$$

. Les vibrations du fil seront limitées si le fil 4 n'est pas soumis à des excitations mécaniques dont la fréquence est égale à la fréquence fondamentale f ou à la fréquence d'une harmonique de cette fréquence fondamentale f. Ces harmoniques possèdent une fréquence $f_n$ = n*f, où n est un nombre entier différent de zéro. Dans ce mode de réalisation, pour limiter les vibrations du fil 4, lors des étapes 202 ou 204, la scie 2 est programmée pour faire varier au moins un des paramètres de découpe choisi dans le groupe composé de la vitesse v, la tension T ou la vitesse $V_m$ de déplacement du matériau 150, les autres paramètres de ce groupe restant constants. Ici, les variations de ce paramètre présentent une densité spectrale de puissance moyenne, dont l'amplitude atteint un maximum $A_{max}$ pour une fréquence différente de f ou de $f_n$, et dont l'amplitude pour chacune des fréquences $f_n$ est au plus égale à 5% ou 2% du maximum $A_{max}$. Avantageusement, le maximum $A_{max}$ est atteint pour une fréquence strictement inférieure à la fréquence f.

En réduisant les vibrations du fil 4 lors des étapes 202 et 204, la mise en contact du fil 4 avec la surface à découper du matériau 150 est facilitée. La précision du positionnement du trait de scie 126 est ainsi améliorée. Notamment, le risque d'un saut incontrôlé du fil 4 lors de cette mise en contact peut être réduit.

Ici, la tension T est égale à 25N, la longueur L est égale à 1m, la masse linéique m est égale à 125mg/m ; la fréquence fondamentale f des vibrations du fil 4 est donc ici égale à environ 223Hz.

Pendant l'étape 206, le fil 4 peut être aussi modélisé par deux cordes tendues lorsqu'il est en contact avec le matériau 150. Les fréquences fondamentales $f_1$, $f_2$ des modes propres de chacun des deux morceaux du fil 4, exprimées en Hertz, sont alors données, respectivement, par l'expression

$$f_1 = 1/(2 \times L_1) \times \sqrt{T/m} \quad \text{et} \quad f_2 = 1/(2 \times L_2) \times \sqrt{T/m}$$

. $L_1$ et $L_2$ sont, respectivement, les longueurs de fil 4 libre entre le matériau 150 et l'un et l'autre des guide-fils 20, 21, telles que $L = L_1 + L_2 + C$. La longueur de coupe C est définie comme la longueur de fil entre les deux points du fil les plus distants en contact avec le matériau 150 à découper. Ici, le matériau 150 possède une section transversale de forme rectangulaire ; la longueur de coupe C est donc constante. Ainsi, lors de l'étape 206, lorsque le fil 4 est en contact direct avec le matériau 150, la variation d'au moins un des paramètres de découpe pour limiter les vibrations du fil 4 est réalisée en fonction de ces valeurs des fréquences $f_1$ et $f_2$ et de leurs harmoniques respectives $n^*f_1$ et $n^*f_2$.

Par exemple, pendant l'étape 206, le matériau 150 est déplacé par intermittence, c'est-à-dire que la vitesse $V_m$ varie périodiquement au cours de l'étape 206, avec une période $T_m$, entre une première valeur $V_{m1}$ et une seconde valeur $V_{m2}$. Ici, $V_{m1}$ est égal à 0mm/s ou 0,5mm/s. $V_{m2}$ est ici compris entre 1 mm/s et 10mm/s ou entre 2mm/s et 8mm/s. La période $T_m$ est choisie pour que le maximum $A_{max}$ de la densité spectrale de puissance moyenne se produise pour des fréquences différentes de $f_1$ et $f_2$ et de leurs harmoniques respectives. De préférence, la période est choisie pour que ce maximum se produise à une fréquence strictement inférieure à $f_1$ et $f_2$. Les autres paramètres sont ici maintenus constants.

Avantageusement, en plus, la vitesse v du fil ou la vitesse $V_m$ de déplacement sont ajustées pendant l'étape 206, afin de limiter l'apparition de vibrations auto-entretenues du fil 4. De telles vibrations sont connues par l'homme de métier sous les termes de « broutement » ou de « vibrations d'usinage ».

La figure 9 représente un fil 140, apte à être utilisé en lieu et place du fil 4. Ce fil 140 est identique au fil 4, sauf que le premier revêtement 12 s'étend de manière discontinue sur l'âme 6 le long de l'axe 10, en formant des bandes 142 successives disjointes régulièrement espacées. Chacune de ces bandes 142 est délimitée de chaque côté par des premier 152, 156 et second 154, 158 plans transversaux du fil 140, ces plans se succédant dans le sens de déplacement 160 du fil 140. La période d'espacement w entre deux bandes immédiatement voisines l'une de l'autre est ici définie comme étant la distance, mesurée le long de l'axe 10, entre les deux premiers plans 152, 156 immédiatement successifs.

La valeur de w est choisie de sorte à limiter l'apparition de vibrations du fil 140. De préférence, pour éviter de générer des vibrations sur le matériau 150, les bandes 142 du fil 140 doivent être en appui sur la surface du matériau 150 en au moins deux points pendant le déplacement du fil 140. Pour cela, il faut que la période w soit inférieure à C/2 et, de préférence, inférieure à C/3. D'autre part, pour éviter que le passage répété des bandes 142 sur le matériau 150 ne génère des excitations à une fréquence $f_0$, il faut que la vitesse v soit inférieure à $w^*f_0$. Pour une valeur de v donnée, la valeur de w est choisie de façon à éviter de générer des excitations à une fréquence proche des modes propres du fil 140. En répartissant périodiquement les bandes 142 le long de l'axe 10 du fil 140 avec une période w ainsi sélectionnée, l'apparition de vibrations du fil 140 est limitée. Ces modes propres du fil 140 peuvent être différents selon que le fil 140 est ou non en contact direct avec le matériau 150.

Tant que le fil 140 n'est pas en contact avec le matériau 150, le fil 140 peut être modélisé comme une corde tendue de longueur L. La fréquence fondamentale f, des modes propres du fil 140 est donnée par l'expression $f = 1/(2 \times L) \times \sqrt{T/m}$ . Ainsi, pour une vitesse v donnée, la période w entre les bandes 142 doit être comprise entre v/f et C/2 et, de préférence, entre v/f et C/3. La période w est donc supérieure ou égale à $2 \times v \times L \times \sqrt{m/T}$ et inférieure à C/2 et, de préférence, inférieure à C/3. Ici, la longueur de coupe C est égale à 156mm ; w est donc comprise entre 45mm et 52mm.

Lorsque le fil 140 est en contact avec le matériau 150, ce fil 140 peut être modélisé comme deux cordes tendues de longueurs $L_1$ et $L_2$, disposées de part et d'autre du matériau 150, entre une extrémité du matériau et, respectivement, l'un et l'autre des guide-fils, comme illustré sur la figure 9. Les fréquences fondamentales des modes propres de chacun de ces deux morceaux libres du fil 140, exprimées en Hertz, sont alors données, respectivement, par les expressions

$$f_1 = 1/(2 \times L_1) \times \sqrt{T/m} \qquad \text{et}$$

$$f_2 = 1/(2 \times L_2) \times \sqrt{T/m} \ .$$

Dans le cas où le matériau à découper est centré par rapport au fil 140, les longueurs $L_1$ et $L_2$ sont égales à (L-C)/2. La période w est donc supérieure ou égale à $v \times (L-C) \times \sqrt{m/T}$ et inférieure à C/2 et, de préférence, inférieure à C/3. Ici, la longueur de coupe C est égale à 156mm ; w est donc comprise entre 19mm et 52mm. En pratique, l'amplitude des vibrations lorsque le fil est en contact avec le matériau est plus importante que lors de l'approche du fil. La plage de valeurs de w la plus large peut alors être préférée, afin de ne pas poser de contraintes trop strictes sur la réalisation du fil.

Le fonctionnement de la scie 3 pour découper le matériau 150 avec le fil 140 va maintenant être décrit, en référence au procédé de la figure 10.

Avantageusement, lors d'une étape 208, le fil 140 est fourni et installé sur une scie 3, identique à la scie 2 sauf qu'elle ne comprend pas le fil 4. Cette étape est identique à l'étape 200, sauf que le fil 140 est installé à la place du fil 4.

L'étape 208 est suivie d'étapes 210, 212, 214 identiques, respectivement, aux étapes 202, 204, 206, sauf que, avantageusement, lors de l'étape 214, les paramètres de découpe ne varient pas.

De nombreux autres modes de réalisation sont possibles.

Par exemple, les parois 22, 24 ne sont pas nécessairement planes. En variante, la réunion des parois 22, 24 présente une section transversale en forme de « U ».

Les particules 14 peuvent être réalisées dans de nombreux matériaux abrasifs différents. Par exemple, elles peuvent être réalisées en SiC, en $SiO_2$, en WC, en $Si_3O_4$, en nitrure de bore, en $CrO_2$, ou en oxyde d'aluminium.

Le liant 16 peut aussi être réalisé dans un matériau autre qu'un métal. Par exemple, en variante, le liant 16 est une résine.

En variante, le revêtement 36 est identique au revêtement 12.

Dans un autre mode de réalisation du fil 4, le revêtement 12 est remplacé par un revêtement multi-couches, comprenant une pluralité de couches de matériaux de caractéristiques distinctes, ces couches étant déposées les unes sur les autres. Ce revêtement multi-couches inclut, par exemple :

- une première couche comprenant un revêtement identique au revêtement 36 et déposé directement sur l'âme 6 ;
- une seconde couche comprenant un revêtement identique au revêtement 12 et déposé directement sur la première couche.

Les différents modes de réalisation du fil 4, notamment ceux décrits en référence aux figures 4 à 7, s'appliquent aussi au fil 140.

La longueur de coupe C n'est pas nécessairement une constante et peut être calculée au fur et à mesure de l'avancement du matériau 150, à partir de la forme connue de la section transversale de ce matériau.

Le liant 16 peut couvrir tout ou partie des particules abrasives 14 du revêtement 12, par exemple lorsque le fil 4 vient d'être fabriqué. Il en va de même pour le liant 38 et les particules 37.

Le fil 4 ou 140 peut couper plus d'un matériau 150 à la fois. Par exemple, le fil 4 ou 140 peut découper simultanément deux matériaux, avec des longueurs de coupe respectives $C_1$ et $C_2$. Dans ce cas, le fil 4 ou 140 présente trois parties libres, sur lesquelles le fil n'est pas en contact avec l'un ou l'autre des matériaux à découper. Chacune de ces parties libres du fil 4 ou 140 peut être modélisée comme une corde tendue, présentant une fréquence fondamentale des modes propres de vibration. Ainsi, lors des étapes 202 et 204, la variation d'au moins un des paramètres de découpe pour limiter les vibrations du fil 4 est réalisée en fonction de ces valeurs de fréquences fondamentales. De même, lorsque le fil 140 est en contact avec ces deux matériaux, la période w est définie en fonction de ces fréquences fondamentales.

Les étapes 202, 204, 206 du procédé de découpe peuvent être mises en oeuvre indépendamment de la présence du revêtement 36 sur le fil 4. Il en va de même pour les étapes 208, 210, 212 et 214 en référence au fil 140.

**Revendications**

1. Scie à fil (2, 3) pour découper un matériau (150), comportant :

   - un fil de découpe (4, 60, 70, 90, 110, 140) comprenant :

      • une âme centrale (6) s'étendant le long d'un axe longitudinal (10) et dont la section, dans un plan transversal perpendiculaire à l'axe longitudinal, est circulaire ;
      • une face avant arrondie (8), comprenant un premier revêtement (12) abrasif, déposé sur l'âme centrale et comprenant une pluralité de particules abrasives (14) maintenues sur l'âme centrale par un liant (16), ce revêtement s'étendant, dans le plan transversal, uniquement et sur la totalité de la largeur de la face avant ;
• une face arrière (26), destinée à être amenée en contact avec des parois (22, 24) d'un guide-fil (20, 21), cette face arrière étant délimitée par deux droites de contact (28, 30) parallèles à l'axe longitudinal ;

- deux guide-fils, configurés pour entraîner en mouvement le fil de découpe le long de son axe longitudinal, chaque guide-fil comprenant deux parois disposées de part et d'autre du fil de découpe pour guider ce fil de découpe, ces parois étant en contact direct avec le fil de découpe le long des deux droites de contact et uniquement entre ces deux droites de contact ;
- la rugosité de la face arrière étant au moins deux fois inférieure à la rugosité de la face avant ;

et **caractérisée en ce que** :

- le fil de découpe comprend un second revêtement (36), dont la rugosité est au moins deux fois inférieure à celle du premier revêtement (12) et au plus huit fois inférieure à celle du premier revêtement, ce second revêtement recouvrant au moins des faces latérales (40, 42) du fil de découpe, ces faces latérales étant situées entre les faces arrière et avant ;
- la face avant est délimitée par deux droites (32, 34) parallèles à l'axe longitudinal (10), ces deux droites définissant, avec l'axe longitudinal, dans le plan transversal, un second triangle dont le sommet situé sur l'axe longitudinal fait un angle $2*\alpha$, tel que $\alpha$, exprimé en degrés, est inférieur ou égal à $\arcsin[(\Phi+2*\eta_2)/(V+2*\eta_1)]$, où :

• $\Phi$ est le diamètre du plus grand cercle inscrit à la section transversale du fil de découpe, ce cercle inscrit étant centré sur l'axe longitudinal,
• $\eta_1$ est la plus grande distance mesurée entre ce cercle inscrit et l'extrémité d'une particule de la face avant, selon une direction radiale au cercle inscrit, et
• $\eta_2$ est la plus grande distance mesurée entre ce cercle inscrit et l'extrémité d'une particule de la face latérale, selon une direction radiale au cercle inscrit.

2. Fil de découpe (4, 60, 70, 90, 110, 140) pour la réalisation d'une scie conforme à la revendication 1, comprenant :

- une âme centrale (6) s'étendant le long d'un axe longitudinal (10) et dont la section, dans un plan transversal perpendiculaire à l'axe longitudinal, est circulaire ;
- une face avant arrondie (8), comprenant un premier revêtement (12) abrasif, déposé sur l'âme centrale et comprenant une pluralité de particules abrasives (14) maintenues sur l'âme centrale par un liant (16), ce revêtement s'étendant, dans le plan transversal, uniquement et sur la totalité de la largeur de la face avant ;
- une face arrière (26), destinée à être amenée en contact avec des parois (22, 24) d'un guide-fil (20, 21), cette face arrière étant délimitée par deux droites de contact (28, 30) parallèles à l'axe longitudinal ;
- la rugosité de la face arrière étant au moins deux fois inférieure à la rugosité de la face avant ;

et **caractérisée en ce que** :

- le fil de découpe comprend un second revêtement (36), dont la rugosité est au moins deux fois inférieure à celle du premier revêtement (12) et au plus huit fois inférieure à celle du premier revêtement, ce second revêtement recouvrant au moins des faces latérales (40, 42) du fil de découpe, ces faces latérales étant situées entre les faces arrière et avant ;
- la face avant est délimitée par deux droites (32, 34) parallèles à l'axe longitudinal (10), ces deux droites définissant, avec l'axe longitudinal, dans le plan transversal, un second triangle dont le sommet situé sur l'axe longitudinal fait un angle $2*\alpha$, tel que $\alpha$, exprimé en degrés, est inférieur ou égal à $\arcsin[(\Phi+2*\eta_2)/(\Phi+2*\eta_1)]$, où :

• $\Phi$ est le diamètre du plus grand cercle inscrit à la section transversale du fil de découpe, ce cercle inscrit étant centré sur l'axe longitudinal,
• $\eta_1$ est la plus grande distance mesurée entre ce cercle inscrit et l'extrémité d'une particule de la face avant, selon une direction radiale au cercle inscrit, et
• $\eta_2$ est la plus grande distance mesurée entre ce cercle inscrit et l'extrémité d'une particule de la face latérale, selon une direction radiale au cercle inscrit.

3. Scie à fil selon la revendication 1 ou fil de découpe selon la revendication 2, dans lequel, sur chaque face latérale (40, 42), le second revêtement (36) s'étend uniquement entre la face avant et, respectivement, deux droites latérales (31, 33) parallèles à l'axe longitudinal (10) et situées de part et d'autre de la face avant, ces droites (31, 33) définissant, avec l'axe longitudinal (10), dans le plan transversal, un troisième triangle dont le sommet situé sur l'axe longitudinal (10) fait un angle $2*\theta$, tel que $\theta$, exprimé en

degrés, est supérieur à ($\varepsilon$ + arccos[$\Phi/(\Phi+2^*\eta_2)$]).

**4.** Scie à fil ou fil de découpe selon la revendication 3, dans lequel le fil (90) comprend un troisième revêtement (102) dont la rugosité est au moins deux fois inférieure à celle du second revêtement (36), ce troisième revêtement recouvrant le second revêtement uniquement sur la face arrière (104).

**5.** Scie à fil selon l'une quelconque des revendications 1 et 3 à 4 ou fil de découpe selon l'une quelconque des revendications 2 à 4, dans lequel le diamètre des particules abrasives (14) du premier revêtement (12) est compris entre 5$\mu$m et 50$\mu$m.

**6.** Scie à fil selon l'une quelconque des revendications 1 et 3 à 5 ou fil de découpe selon l'une quelconque des revendications 2 à 5, dans lequel la dureté des particules abrasives (14), mesurée sur l'échelle de Vickers, est supérieure ou égale à 800 Hv50.

**7.** Procédé de découpe d'un matériau, **caractérisé en ce que** ce procédé comprend :

> - la mise en marche (202) d'une scie à fil conforme à l'une quelconque des revendications 1 et 3 à 6, dans laquelle le fil est tendu entre les deux guide-fils avec une tension mécanique T, présente une longueur L entre ces deux guide-fils et se déplace à une vitesse v dans sa direction longitudinale ;
> - le déplacement (204) du matériau à découper vers le fil de découpe, à une vitesse $V_m$, de manière à l'amener en contact direct avec le premier revêtement du fil de découpe ;
> - la découpe (206) du matériau par les particules abrasives du premier revêtement.

**8.** Procédé de découpe selon la revendication 7, dans lequel, lors de la mise en marche (202) de la scie ou lors du déplacement (204) du matériau, au moins un paramètre du procédé de découpe choisi dans le groupe composé de la vitesse v, la vitesse $V_m$ et de la tension T varie, les autres paramètres de ce groupe restant constants, les variations de ce paramètre présentant une densité spectrale de puissance moyenne dont l'amplitude atteint un maximum $A_{max}$ pour une fréquence différente d'une fréquence fondamentale f et de tout multiple entier de la fréquence fondamentale f, et dont l'amplitude pour la fréquence fondamentale f et pour chacun des multiples entiers non nuls de la fréquence fondamentale f est au plus égale à 5% du maximum d'amplitude $A_{max}$, où f est

égale à $1/(2 \times L) \times \sqrt{T/m}$, m étant la masse linéique du fil.

**9.** Procédé de découpe selon les revendications 7 ou 8, dans lequel, lors de la découpe (206) du matériau, lorsque le fil est en contact direct avec le matériau, au moins un paramètre du procédé de découpe choisi dans le groupe composé de la vitesse v, de la vitesse $V_m$ et de la tension T varie, les autres paramètres de ce groupe restant constants, les variations de ce paramètre présentant une densité spectrale de puissance moyenne dont l'amplitude atteint un maximum $A_{max}$ pour une fréquence différente de fréquences fondamentales $f_1$ et $f_2$ et de tout multiple entier de ces fréquences fondamentales $f_1$ et $f_2$, et dont l'amplitude pour ces fréquences fondamentales $f_1$ et $f_2$ et pour chacun des multiples entiers non nuls des fréquences fondamentales $f_1$ et $f_2$ est au plus égale à 5% du maximum d'amplitude $A_{max}$, où $f_1$ est

égale à $1/(2 \times L_1) \times \sqrt{T/m}$ et f2 est égale à

$1/(2 \times L_2) \times \sqrt{T/m}$, où :

> - m est la masse linéique du fil,
> - $L_1$ est la longueur de fil apte à vibrer comme une corde tendue, située immédiatement d'un côté du matériau, et
> - $L_2$ est la longueur de fil apte à vibrer comme une corde tendue, située immédiatement de l'autre côté du matériau.

**10.** Procédé de découpe selon l'une quelconque des revendications 7 à 9, comprenant la fourniture (208) d'un fil de découpe, dans lequel le premier revêtement s'étend le long de l'axe longitudinal de manière discontinue en formant des bandes successives disjointes régulièrement espacées avec une période d'espacement w comprise entre

$$min\left(1/(2 \times L_1) \times \sqrt{T/m}\, ; 1/(2 \times L_2) \times \sqrt{T/m}\right)$$

et C/2, où :

> - min(a ; b) est une fonction mathématique qui, appliquée à deux valeurs réelles a et b distinctes, retourne la plus petite des valeurs a et b ;
> - m est la masse linéique du fil,
> - C la longueur de coupe, définie comme la longueur de fil entre les deux points du fil les plus distants en contact avec le matériau à découper,
> - $L_1$ est la longueur de fil apte à vibrer comme une corde tendue, située immédiatement d'un côté du matériau, et
> - $L_2$ est la longueur de fil apte à vibrer comme une corde tendue, située immédiatement de l'autre côté du matériau.

**Patentansprüche**

1.  Drahtsäge (2, 3) zum Schneiden eines Materials (150), welche aufweist:

    - einen Schneidedraht, (4, 60, 70, 90, 110, 140), welcher aufweist:

        • eine zentrale Seele (6), die sich entlang einer Längsachse (10) erstreckt und deren Querschnitt in einer zu der Längsachse senkrechten Querebene kreisförmig ist;
        • eine abgerundete Vorderfläche (8), die eine erste abrasive Beschichtung (12) aufweist, die auf die zentrale Seele aufgebracht ist und eine Vielzahl von abrasiven Partikeln (14) aufweist, die durch ein Bindemittel (16) auf der zentralen Seele gehalten werden, wobei sich diese Beschichtung in der Querebene ausschließlich auf der Vorderfläche und über deren gesamte Breite erstreckt;
        • eine Hinterfläche (26), die dazu bestimmt ist, mit Wänden (22, 24) einer Drahtführung (20, 21) in Kontakt gebracht zu werden, wobei diese Hinterfläche von zwei Kontaktgeraden (28, 30) begrenzt wird, die zu der Längsachse parallel sind;

    - zwei Drahtführungen, die dafür ausgebildet sind, den Schneidedraht entlang seiner Längsachse in Bewegung zu versetzen, wobei jede Drahtführung zwei Wände aufweist, die beiderseits des Schneidedrahts angeordnet sind, um diesen Schneidedraht zu führen, wobei sich diese Wände entlang der zwei Kontaktgeraden und ausschließlich zwischen diesen zwei Kontaktgeraden in direktem Kontakt mit dem Schneidedraht befinden;
    - wobei die Rauigkeit der Hinterfläche mindestens zweimal so gering ist wie die Rauigkeit der Vorderfläche;

    und **dadurch gekennzeichnet ist, dass**:

        - der Schneidedraht eine zweite Beschichtung (36) aufweist, deren Rauigkeit mindestens zweimal so gering ist wie diejenige der ersten Beschichtung (12) und höchstens achtmal so gering ist wie diejenige der ersten Beschichtung, wobei diese zweite Beschichtung mindestens Seitenflächen (40, 42) des Schneidedrahtes bedeckt, wobei sich diese Seitenflächen zwischen der Hinter-und der Vorderfläche befinden;
        - die Vorderfläche von zwei zu der Längsachse (10) parallelen Geraden (32, 34) begrenzt wird, wobei diese zwei Geraden mit der Längsachse in der Querebene ein zweites Dreieck definieren, an dessen auf der Längsachse befindlicher Spitze ein solcher Winkel $2*\alpha$ gebildet wird, dass $\alpha$, in Grad ausgedrückt, kleiner oder gleich arcsin$[(\Phi+2*\eta_2)/(\Phi+2*\eta_1)]$ ist, wobei:

        • $\Phi$ der Durchmesser des größten in den Querschnitt des Schneidedrahtes einbeschriebenen Kreises ist, wobei dieser einbeschriebene Kreis auf der Längsachse zentriert ist,
        • $\eta_1$ der größte gemessene Abstand zwischen diesem einbeschriebenen Kreis und dem Ende eines Partikels der Vorderfläche entlang einer bezüglich des einbeschriebenen Kreises radialen Richtung ist, und
        • $\eta_2$ der größte gemessene Abstand zwischen diesem einbeschriebenen Kreis und dem Ende eines Partikels der Seitenfläche entlang einer bezüglich des einbeschriebenen Kreises radialen Richtung ist.

2.  Schneidedraht, (4, 60, 70, 90, 110, 140) zur Herstellung einer Säge nach Anspruch 1, welcher aufweist:

    - eine zentrale Seele (6), die sich entlang einer Längsachse (10) erstreckt und deren Querschnitt in einer zu der Längsachse senkrechten Querebene kreisförmig ist;
    - eine abgerundete Vorderfläche (8), die eine erste abrasive Beschichtung (12) aufweist, die auf die zentrale Seele aufgebracht ist und eine Vielzahl von abrasiven Partikeln (14) aufweist, die durch ein Bindemittel (16) auf der zentralen Seele gehalten werden, wobei sich diese Beschichtung in der Querebene ausschließlich auf der Vorderfläche und über deren gesamte Breite erstreckt;
    - eine Hinterfläche (26), die dazu bestimmt ist, mit Wänden (22, 24) einer Drahtführung (20, 21) in Kontakt gebracht zu werden, wobei diese Hinterfläche von zwei Kontaktgeraden (28, 30) begrenzt wird, die zu der Längsachse parallel sind;
    - wobei die Rauigkeit der Hinterfläche mindestens zweimal so gering ist wie die Rauigkeit der Vorderfläche;

    und **dadurch gekennzeichnet ist, dass**:

        - der Schneidedraht eine zweite Beschichtung (36) aufweist, deren Rauigkeit mindestens zweimal so gering ist wie diejenige der ersten Beschichtung (12) und höchstens achtmal so gering ist wie diejenige der ersten Beschichtung, wobei diese zweite Beschichtung mindestens Seitenflächen (40, 42) des Schneidedrahtes bedeckt, wobei sich diese Seitenflächen zwischen der Hinter-und der Vorderfläche befinden;
        - die Vorderfläche von zwei zu der Längsachse (10) parallelen Geraden (32, 34) begrenzt wird, wobei diese zwei Geraden mit der Längsachse in der Querebene ein zweites Dreieck definieren, an dessen auf der Längsachse befindlicher Spitze ein solcher Winkel 2*$\alpha$ gebildet wird, dass $\alpha$, in Grad ausgedrückt, kleiner oder gleich arc-sin[($\Phi$+2*$\eta_2$)/($\Phi$+2*$\eta_1$)] ist, wobei:

• $\Phi$ der Durchmesser des größten in den Querschnitt des Schneidedrahtes einbeschriebenen Kreises ist, wobei dieser einbeschriebene Kreis auf der Längsachse zentriert ist,
• $\eta_1$ der größte gemessene Abstand zwischen diesem einbeschriebenen Kreis und dem Ende eines Partikels der Vorderfläche entlang einer bezüglich des einbeschriebenen Kreises radialen Richtung ist, und
• $\eta_2$ der größte gemessene Abstand zwischen diesem einbeschriebenen Kreis und dem Ende eines Partikels der Seitenfläche entlang einer bezüglich des einbeschriebenen Kreises radialen Richtung ist.

3. Drahtsäge nach Anspruch 1 oder Schneidedraht nach Anspruch 2, wobei sich auf jeder Seitenfläche (40, 42) die zweite Beschichtung (36) ausschließlich zwischen der Vorderfläche und jeweils zwei seitlichen Geraden (31, 33) erstreckt, die zu der Längsachse (10) parallel und beiderseits der Vorderfläche angeordnet sind, wobei diese Geraden (31, 33) mit der Längsachse (10) in der Querebene ein drittes Dreieck definieren, an dessen auf der Längsachse (10) befindlicher Spitze ein solcher Winkel 2*$\theta$ gebildet wird, dass $\theta$, in Grad ausgedrückt, größer als ($\varepsilon$ + arccos[$\Phi$/($\Phi$+2*$\eta_2$)]) ist.

4. Drahtsäge oder Schneidedraht nach Anspruch 3, wobei der Draht (90) eine dritte Beschichtung (102) aufweist, deren Rauigkeit mindestens zweimal so gering wie diejenige der zweiten Beschichtung (36) ist, wobei diese dritte Beschichtung die zweite Beschichtung ausschließlich auf der Hinterfläche (104) bedeckt.

5. Drahtsäge nach einem der Ansprüche 1 und 3 bis 4 oder Schneidedraht nach einem der Ansprüche 2 bis 4, wobei der Durchmesser der abrasiven Partikel (14) der ersten Beschichtung (12) zwischen 5 $\mu$m und 50 $\mu$m liegt.

6. Drahtsäge nach einem der Ansprüche 1 und 3 bis 5 oder Schneidedraht nach einem der Ansprüche 2 bis 5, wobei die Härte der abrasiven Partikel (14), auf der Vickers-Skala gemessen, größer oder gleich 800 Hv50 ist.

7. Verfahren zum Schneiden eines Materials, **dadurch gekennzeichnet, dass** das Verfahren aufweist:

- die Ingangsetzung (202) einer Drahtsäge nach einem der Ansprüche 1 und 3 bis 6, in welcher der Draht zwischen zwei die Drahtführungen mit einer mechanischen Spannung T gespannt ist, eine Länge L zwischen diesen zwei Drahtführungen aufweist und sich mit einer Geschwindigkeit v in seiner Längsrichtung bewegt;
- die Verschiebung (204) des zu schneidenden Materials in Richtung des Schneidedrahtes mit einer Geschwindigkeit $V_m$, derart, dass es in direkten Kontakt mit der ersten Beschichtung des Schneidedrahtes gebracht wird;
- das Schneiden (206) des Materials durch die abrasiven Partikel der ersten Beschichtung.

8. Verfahren zum Schneiden nach Anspruch 7, wobei während der Ingangsetzung (202) der Säge oder während der Verschiebung (204) des Materials mindestens ein Parameter des Verfahrens zum Schneiden, der aus der Gruppe ausgewählt ist, welche aus der Geschwindigkeit v, der Geschwindigkeit $V_m$ und der Spannung T besteht, variiert, während die anderen Parameter dieser Gruppe konstant bleiben, wobei die Variationen dieses Parameters eine mittlere spektrale Leistungsdichte aufweisen, deren Amplitude ein Maximum $A_{max}$ für eine Frequenz erreicht, die von einer Grundfrequenz f und von jedem ganzzahligen Vielfachen der Grundfrequenz f verschieden ist, und deren Amplitude für die Grundfrequenz f und für jedes der von Null verschiedenen ganzzahligen Vielfachen der Grundfrequenz f höchstens gleich 5 % des Amplitudenmaximums $A_{max}$ ist, wobei f gleich $(2 \times L) \times \sqrt{T/m}$ ist, wobei m die längenbezogene Masse des Drahtes ist.

9. Verfahren zum Schneiden nach den Ansprüchen 7 oder 8, wobei während des Schneidens (206) des Materials, während der Draht sich in direktem Kontakt mit dem Material befindet, mindestens ein Parameter des Verfahrens zum Schneiden, der aus der Gruppe ausgewählt ist, welche aus der Geschwindigkeit v, der Geschwindigkeit $V_m$ und der Spannung T besteht, variiert, während die anderen Parameter dieser Gruppe konstant bleiben, wobei die Variationen dieses Parameters eine mittlere spektrale Leistungsdichte aufweisen, deren Amplitude ein Maximum $A_{max}$ für eine Frequenz erreicht, die von Grundfrequenzen $f_1$ und $f_2$ und von jedem ganzzahligen Vielfachen dieser Grundfrequenzen $f_1$ und $f_2$ verschieden ist, und deren Amplitude für diese Grundfrequenzen $f_1$ und $f_2$ und für jedes der von Null verschiedenen ganzzahligen Vielfachen der Grundfrequenzen $f_1$ und $f_2$ höchstens gleich 5 % des Ampli-

tudenmaximums $A_{max}$ ist, wobei $f_1$ gleich

$$(2 \times L_1) \times \sqrt{T/m}$$ ist und $f_2$ gleich

$$1/(2 \times L_2) \times \sqrt{T/m}$$ ist, wobei:

- m die längenbezogene Masse des Drahtes ist,
- $L_1$ die Drahtlänge ist, die wie ein gespanntes Seil schwingfähig ist und sich unmittelbar auf einer Seite des Materials befindet, und
- $L_2$ die Drahtlänge ist, die wie ein gespanntes Seil schwingfähig ist und sich unmittelbar auf der anderen Seite des Materials befindet.

10. Verfahren zum Schneiden nach einem der Ansprüche 7 bis 9, welches die Zuführung (208) eines Schneidedrahtes aufweist, bei welchem sich die erste Beschichtung diskontinuierlich entlang der Längsachse erstreckt und dabei aufeinander folgende getrennte Streifen bildet, die gleichmäßige Abstände aufweisen, mit einer Abstandsperiode w zwischen

$$min\ (1/(2 \times L_1) \times \sqrt{T/m}\ ;\ (2 \times L_2) \times \sqrt{T/m}\ )$$

und C/2; wobei:

- min(a; b) eine mathematische Funktion ist, welche, wenn sie auf zwei reelle voneinander verschiedene Werte a und b angewendet wird, den kleineren der Werte a und b zurückgibt;
- m die längenbezogene Masse des Drahtes ist,
- C die Schnittlänge ist, definiert als die Drahtlänge zwischen den zwei am weitesten voneinander entfernten Punkten des Drahtes, die sich mit dem zu schneidenden Material in Kontakt befinden,
- $L_1$ die Drahtlänge ist, die wie ein gespanntes Seil schwingfähig ist und sich unmittelbar auf einer Seite des Materials befindet, und
- $L_2$ die Drahtlänge ist, die wie ein gespanntes Seil schwingfähig ist und sich unmittelbar auf der anderen Seite des Materials befindet.

**Claims**

1. Wire saw (2, 3) for cutting a material (150), comprising:

- a cutting wire (4, 60, 70, 90, 110, 140) comprising:

• a central core (6) extending along a longitudinal axis (10) and the section of which, in a transverse plane at right angles to the longitudinal axis, is circular;
• a rounded front face (8) comprising a first abrasive coating (12), deposited on the central core and comprising a plurality of abrasive particles (14) held on the central core by a binder (16), this coating extending in the transverse plane only and over all of the width of the front face;
• a rear face (26), intended to be brought into contact with walls (22, 24) of a wire guide (20, 21), this rear face being delimited by two straight contact lines (28, 30) parallel to the longitudinal axis;
two wire guides, configured to drive the cutting wire in motion along its longitudinal axis, each wire guide comprising two walls arranged on either side of the cutting wire to guide this cutting wire, these walls being in direct contact with the cutting wire along the two straight contact lines and only between these two straight contact lines;
the roughness of the rear face being at least two times less than the roughness of the front face;

and **characterized in that**:
- the cutting wire comprises a second coating (36), the roughness of which is at least two times less than that of the first coating (12) and at most eight times less than that of the first coating, this second coating covering at least lateral faces (40, 42) of the cutting wire, these lateral faces being situated between the rear and front faces;
- the front face is delimited by two straight lines (32, 34) parallel to the longitudinal axis (10), these two straight lines defining, with the longitudinal axis, in the transverse plane, a second triangle, the vertex of which located on the longitudinal axis forms an angle 2*$\alpha$, such that $\alpha$, expressed in degrees, is less than or equal to arcsin [($\phi$+2*$\eta_2$)/($\phi$+2*$\eta_1$)], in which:

• $\phi$ is the diameter of the greatest circle inscribed in the transverse section of the cutting wire, this inscribed circle being centred on the longitudinal axis,
• $\phi\ \eta_1$ is the greatest distance measured between this inscribed circle and the end of a particle of the front face, in a direction radial to the inscribed circle, and
• $\eta_2$ is the greatest distance measured between this inscribed circle and the end of a particle of the lateral face, in a direction radial to the inscribed circle.

2. Cutting wire (4, 60, 70, 90, 110, 140) for producing a saw in accordance with Claim 1, comprising:

- a central core (6) extending along a longitudinal axis (10) and the section of which, in a transverse plane at right angles to the longitudinal axis, is circular;

- a rounded front face (8), comprising a first abrasive coating (12), deposited on the central core and comprising a plurality of abrasive particles (14) held on the central core by a binder (16), this coating extending in the transverse plane only and over all of the width of the front face;

- a rear face (26), intended to be brought into contact with walls (22, 24) of a wire guide (20, 21), this rear face being delimited by two straight contact lines (28, 30) parallel to the longitudinal axis;

- the roughness of the rear face being at least two times less than the roughness of the front face;

and **characterized in that**:

- the cutting wire comprises a second coating (36), the roughness of which is at least two times less than that of the first coating (12) and at most eight times less than that of the first coating, this second coating covering at least lateral faces (40, 42) of the cutting wire, these lateral faces being situated between the rear and front faces;

- the front face is delimited by two straight lines (32, 34) parallel to the longitudinal axis (10), these two straight lines defining, with the longitudinal axis, in the transverse plane, a second triangle, the vertex of which located on the longitudinal axis forms an angle 2*$\alpha$, such that $\alpha$, expressed in degrees, is less than or equal to arcsin [($\phi$+2*$\eta_2$)/($\phi$+2*$\eta_1$)], in which:

  • $\phi$ is the diameter of the greatest circle inscribed in the transverse section of the cutting wire, this inscribed circle being centred on the longitudinal axis,

  • $\eta_1$ is the greatest distance measured between this inscribed circle and the end of a particle of the front face, in a direction radial to the inscribed circle, and

  • $\eta_2$ is the greatest distance measured between this inscribed circle and the end of a particle of the lateral face, in a direction radial to the inscribed circle.

3. Wire saw according to Claim 1 or cutting wire according to Claim 2, in which, on each lateral face (40, 42), the second coating (36) extends only between the front face and, respectively, two lateral straight lines (31, 33) parallel to the longitudinal axis (10) and located on either side of the front face, these straight lines (31, 33) defining, with the longitudinal axis (10), in the transverse plane, a third triangle, the vertex of which located on the longitudinal axis (10) forms an angle 2*$\theta$, such that $\theta$, expressed in degrees, is greater than $\epsilon$+arccos[$\phi$/($\phi$+2*$\eta_2$)]).

4. Wire saw or cutting wire according to Claim 3, in which the wire (90) comprises a third coating (102), the roughness of which is at least two times less than that of the second coating (36), this third coating covering the second coating only on the rear face (104).

5. Wire saw according to any one of Claims 1 and 3 to 4 or cutting wire according to any one of Claims 2 to 4, in which the diameter of the abrasive particles (14) of the first coating (12) lies between 5 $\mu$m and 50 $\mu$m.

6. Wire saw according to any one of Claims 1 and 3 to 5 or cutting wire according to any one of Claims 2 to 5, in which the hardness of the abrasive particles (14), measured on the Vickers scale, is greater than or equal to 800 Hv50.

7. Method for cutting a material, **characterized in that** this method comprises:

  - the starting up (202) of a wire saw according to any one of Claims 1 and 3 to 6, in which the wire is stretched between the two wire guides with a mechanical tension T, has a length L between these two wire guides and is displaced at a speed v in its longitudinal direction;

  - the displacement (204) of the material to be cut towards the cutting wire, at a speed $V_m$, so as to bring it into direct contact with the first coating of the cutting wire;

  - the cutting (206) of the material by the abrasive particles of the first coating.

8. Cutting method according to Claim 7, in which, upon the starting up (202) of the saw or during the displacement (204) of the material at least one parameter of the cutting method chosen from the group consisting of the speed v, the speed $V_m$ and the tension T varies, the other parameters of this group remaining constant, the variations of this parameter exhibiting an average power spectral density the amplitude of which reaches a maximum $A_{max}$ for a frequency different from a fundamental frequency f and from any integer multiple of the fundamental frequency f, and the amplitude of which for the fundamental frequency f and for each of the non-zero integer multiples of the fundamental frequency f is at most equal to 5% of the maximum amplitude $A_{max}$ in which f is

equal to $1/(2xL)x \sqrt{T/m}$ , m being the mass per unit length of the wire.

9. Cutting method according to Claim 7 or 8, in which, during the cutting (206) of the material, when the wire is in direct contact with the material, at least one parameter of the cutting method chosen from the group consisting of the speed v, the speed $V_m$ and the tension T varies, the other parameters of this group remaining constant, the variations of this parameter exhibiting a mean power spectral density the amplitude of which reaches a maximum $A_{max}$ for a frequency different from the fundamental frequencies $f_1$ and $f_2$ and from any integer multiple of these fundamental frequencies $f_1$ and $f_2$, and the amplitude of which for these fundamental frequencies $f_1$ and $f_2$ and for each of the non-zero integer multiples of the fundamental frequencies $f_1$ and $f_2$ is at most equal to 5% of the maximum amplitude $A_{max}$, in which $f_1$ is equal to $(2xL_1)x\sqrt{T/m}$ and $f_2$ is equal to $1/(2xL_2)x\sqrt{T/m}$ in which:

- m is the mass per unit length of the wire,
- $L_1$ is the length of wire able to vibrate like a taut cord, situated immediately to one side of the material, and
- $L_2$ is the length of wire able to vibrate like a taut cord, situated immediately on the other side of the material.

10. Cutting method according to any one of Claims 7 to 9, comprising the supply (208) of a cutting wire, in which the first coating extends along the longitudinal axis discontinuously by forming unconnected successive bands that are evenly spaced with a spacing interval w of between $min\ (1/(2xL_1)x\sqrt{T/m}\ ; 1/(2xL_2)x\sqrt{T/m}\ )$ and C/2, in which:

- min (a; b) is a mathematical function which, when applied to two distinct real values a and b, returns the smaller of the values a and b;
- m is the mass per unit length of the wire,
- C is the cutting length, defined as the length of wire between the two most distant points of the wire in contact with the material to be cut,
- $L_1$ is the length of wire able to vibrate like a taut cord, situated immediately on one side of the material, and
- $L_2$ is the length of wire able to vibrate like a taut cord, situated immediately on the other side of the material.

Fig. 1

Fig. 2

Fig. 3

Fig. 4

Fig. 5

Fig. 6

Fig. 7

Fig. 8

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011126813 A
- JP 2010167509 A
- DE 3716943 A1
- WO 8202511 A1
- US 4187828 A